# EUROPEAN PATENT SPECIFICATION

(11) **EP 2 388 532 B1**
(45) Date of publication and mention of the grant of the patent: **15.06.2016**
(21) Application number: 11158594.9
(22) Date of filing: 17.03.2011
(51) Int. Cl.: F24D 11/02, F24D 17/02

(54) **Hot water supply device with heat pump**
Heißwasserversorgungsvorrichtung mit Wärmepumpe
Dispositif d'alimentation en eau chaude avec une pompe à chaleur

(30) Priority: 20.05.2010 KR 20100047300
(43) Date of publication of application: 23.11.2011
(73) Proprietor: LG Electronics Inc., Seoul 150-721 (KR)
(72) Inventor: Sim, Jieseop, Gyeongnam 641-711 (KR)
(74) Representative: Vossius & Partner Patentanwälte Rechtsanwälte mbB

(56) References cited:
- EP-A1- 1 780 476
- JP-A- H04 263 758
- JP-A- 2006 090 574

## Description

### BACKGROUND OF THE INVENTION

### 1. Field of the Invention

The present invention relates to a hot water supply device associated with a heat pump to supply hot water.

### 2. Description of the Related Art

In general, a hot water supply device uses a heating source to heat water and supply the heated water to a user. In this case, a device using a heat pump to heat water and supply the heated water to a user can be referred to as a hot water supply device associated with a heat pump.

The hot water supply device associated with the heat pump includes a water supply passage for supplying water, a water storage part for storing the water supplied through the water supply passage, a heating source for heating the supplied water, and a water discharge passage for supplying the heated water to a user.

The heat pump includes a compressor compressing a refrigerant, a condenser in which the refrigerant discharged from the compressor is condensed, an expander in which the refrigerant passing through the condenser is expanded, an evaporator in which the refrigerant expanded through the expander is evaporated, and a refrigerant pipe connecting the compressor, the condenser, the expander, and the evaporator to form a refrigerant cycle.

While the refrigerant flows in the heat pump, the refrigerant absorbs heat in the evaporator and emits heat in the condenser. The refrigerant transmits heat to the water in the hot water supply device, so that the hot water supply device can perform a hot water supply operation.

JP 2006 090574 A relates to a heat pump type hot water supply heating system provided with a plurality of heat pump circuits, according to the preamble of claim 1.

### SUMMARY OF THE INVENTION

The present invention provides a hot water supply device associated with a heat pump as defined in claim 1, which may improve hot water supply performance and heating performance at the same time.

### BRIEF DESCRIPTION OF THE DRAWINGS

Fig. 1 is a schematic view of a hot water supply device associated with a heat pump according to a first embodiment.
Fig. 2 is a schematic view of a hot water supply device associated with a heat pump according to a second embodiment.
Fig. 3 is a schematic view of a hot water supply device associated with a heat pump according to a third embodiment.
Fig. 4 is a schematic view of a hot water supply device associated with a heat pump according to a fourth embodiment.
Fig. 5 is a schematic view illustrating a refrigerant flow in case where a hot water supply device associated with a heat pump performs an ordinary operation according to a fifth embodiment.
Fig. 6 is a schematic view illustrating a refrigerant flow in case where the hot water supply device associated with the heat pump performs a defrosting operation according to the fifth embodiment.
Fig. 7 is a schematic view of a hot water supply device associated with a heat pump according to a sixth embodiment.
Fig. 8 is a schematic view illustrating a refrigerant flow in case where a hot water supply device associated with a heat pump performs an ordinary operation according to a seventh embodiment.
Fig. 9 is a schematic view illustrating a refrigerant flow in case where the hot water supply device associated with the heat pump performs a defrosting operation according to the seventh embodiment.
Fig. 10 is a schematic view of a hot water supply device associated with a heat pump according to an eighth embodiment.
Fig. 11 is a schematic view of a hot water supply device associated with a heat pump according to a ninth embodiment.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

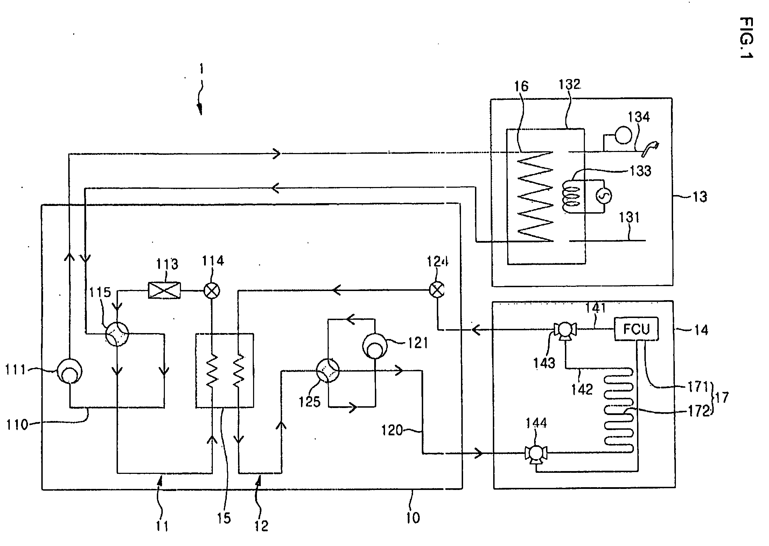

Fig. 1 is a schematic view of a hot water supply device associated with a heat pump according to a first embodiment. Referring to Fig. 1, a hot water supply device 1 associated with a heat pump includes a first refrigerant circulation part 11 in which a first refrigerant cycle using a first refrigerant is performed, a second refrigerant circulation part 12 in which a second refrigerant cycle using a second refrigerant is performed, a hot water supply part 13 which supplies hot water using the first refrigerant, and a heating part 14 which heats an indoor space using the second refrigerant.

In detail, the first refrigerant circulation part 11 includes a first compressor 111 compressing the first refrigerant, a first hot water supply heat exchanger 16 in which the first refrigerant discharged from the first compressor 111 flows to heat water supplied for supplying hot water, a cascade heat exchanger 15 exchanging heat between the first refrigerant and the second refrigerant, an outdoor heat exchanger 113 exchanging heat between the first refrigerant and outdoor air, a first expander disposed between the cascade heat exchanger 15 and the outdoor heat exchanger 113 in the first refrigerant cycle to expand the first refrigerant, a first flow switch part 115 selectively switching a flow direction of the first refrigerant passing through the hot water supply heat exchanger 16 into one of the cascade heat exchanger 15 and the outdoor heat exchanger 113, and a first refrigerant pipe 110 connecting the first compressor 111, the hot water supply heat exchanger 16, the cascade heat exchanger 15, the first expander 114, the outdoor heat exchanger 113, and the first flow switch part 115 to each other to form the first refrigerant cycle.

Here, since the hot water supply heat exchanger 16 is disposed between the first compressor 111 and the first flow switch part 115 in the first refrigerant cycle, the high-temperature refrigerant discharged from the first compressor 111 may flow into the hot water supply heat exchanger 16, regardless of a switch state of the first flow switch part 115. According to the invention, the hot water supply heat exchanger 16 is a first refrigerant passage which is disposed in a water supply storage part 132 (described later) to heat the water supplied for supplying the hot water by the first refrigerant. However, since the cascade heat exchanger 15 and the outdoor heat exchanger 113 are disposed downstream of the first flow switch part 115 with respect to a flow of the first refrigerant in the first refrigerant cycle, the first refrigerant having a different state may flow into the cascade heat exchanger 15 and the outdoor heat exchanger 113 according to the switch state of the first flow switch part 115.

In detail, when the hot water supply device 1 associated with the heat pump is operated in a heating mode, the first flow switch part 115 is maintained in a state in which the first refrigerant passing through the hot water supply heat exchanger 16 is introduced into the cascade heat exchanger 15. Thus, the heat of the first refrigerant is transferred into the second refrigerant while the first refrigerant passes through the first refrigerant passes through the cascade heat exchanger 15, and thus the first refrigerant is condensed. Also, the first refrigerant receives heat from the outdoor air while passing through the outdoor heat exchanger 113, and thus the first refrigerant is evaporated.

However, when the hot water supply device 1 associated with the heat pump is operated in cooling mode, the first flow switch part 115 is maintained in a state in which the first refrigerant passing through the hot water supply heat exchanger 16 is introduced into the outdoor heat exchanger 113. Thus, the first refrigerant is condensed while passing through the outdoor heat exchanger 113 and is evaporated while passing through the cascade heat exchanger 15.

Here, in consideration that the hot water supply device 1 associated with the heat pump is operated in the heating mode, the first refrigerant circulation part 11 may include the first compressor 111 compressing the first refrigerant, a plurality of condensers 15 and 16 in which the first refrigerant discharged from the first compressor 111 is condensed, the first expander 114 in which the first refrigerant passing through the plurality of condensers 15 and 16 is expanded, and a first evaporator 113 in which the first refrigerant passing through the first expander 114 is evaporated. Also, the plurality of condensers 15 and 16 may include a hot water supply condenser 16 for supplying hot water using the high-temperature refrigerant discharged from the first compressor 111 and a cascade condenser 15 exchanging heat between the first refrigerant and the second refrigerant. Here, the hot water supply condenser 16 may be referred to as a primary condenser 16 in that the high-temperature refrigerant discharged from the first compressor 111 is primarily condensed, and the cascade condenser 15 may be referred to as a secondary condenser 15 in that the first refrigerant is secondarily condensed.

Here, the hot water supply condenser 16 may represent the hot water supply heat exchanger 16. Also, the cascade condenser 15 may represent the cascade heat exchanger 15, and the first evaporator 113 may represent the outdoor heat exchanger 113. The second refrigerant circulation part 12 includes a second compressor 121 compressing the second refrigerant, an indoor heat exchanger 17 exchanging heat between indoor air and the second refrigerant, the cascade heat exchanger 15 exchanging heat between the first refrigerant and the second refrigerant, a second expander 124 disposed between the indoor heat exchanger 17 and the cascade heat exchanger 15 in the refrigerant cycle to expand the second refrigerant, a second flow switch part 125 selectively switching a flow direction of the second refrigerant passing through the second compressor 121 toward one of the indoor heat exchanger 17 and the cascade heat exchanger 15, and a second refrigerant pipe 120 connecting the second compressor 121, the indoor heat exchanger 17, the cascade heat exchanger 15, the second expander 124, and the second flow switch part 125 to each other to form the second refrigerant cycle. The indoor heat exchanger 17 is a second refrigerant passage disposed adjacent to the indoor space to exchange heat between the indoor air and the second refrigerant.

Here, since the indoor exchanger 17 and the cascade heat exchanger 15 are disposed downstream of the second flow switch part 125 with respect to a flow of the second refrigerant in the second refrigerant cycle, the second refrigerant having a different state may flow into the indoor exchanger 17 and the cascade heat exchanger 15 according to the switch stale of the second flow switch part 125.

In more detail, when the hot water supply device 1 associated with the heat pump is operated in the heating mode, the second flow switch part 125 is maintained in a state in which the second refrigerant passing through the second compressor 121 is introduced into the indoor heat exchanger 17. Thus, the heat of the second refrigerant is released into the indoor space while the second refrigerant passing through the indoor heat exchanger 17. Also, the second refrigerant is heated by the first refrigerant while passing through the cascade heat exchanger 15, and thus the second refrigerant is evaporated.

However, when the hot water supply device 1 associated with the heat pump is operated in the cooling mode, the second flow switch part 125 is maintained in a state in which the second refrigerant passing through the second compressor 121 is introduced into the cascade heat exchanger 15. Thus, the heat of the second refrigerant is transferred into the first refrigerant while passing through the cascade heat exchanger 15, and thus the second refrigerant is condensed. Also, the second refrigerant absorbs heat from the indoor air while passing through the indoor heat exchanger 17, and thus the second refrigerant is evaporated.

Here, in consideration that the hot water supply device 1 associated with the heat pump is operated in the heating mode, the second refrigerant circulation part 12 may include the second compressor 121 compressing the second refrigerant, a condenser 17 for heating (hereinafter, referred to as a heating condenser) in which the second refrigerant discharged from the second compressor 121 releases heat into the indoor space, and thus is condensed, the second expander 124 in which the second refrigerant passing through the heating condenser 17 is expanded, and the second evaporator 15 in which the second refrigerant passing through the second expander 124 is evaporated.

Here, the heating condenser 17 represents the indoor heat exchanger 17, and the second evaporator 15 represents the cascade heat exchanger 15. That is, the cascade heat exchanger 15 may represent a cascade condenser 15 in the first refrigerant cycle and the second evaporator 15 in the second refrigerant cycle. Also, the cascade heat exchanger 15 is a unit in which passages for the first refrigerant and the second refrigerant are independently defined to exchange heat between the first refrigerant and the second refrigerant. For example, various heat exchangers such as a plate type heat exchanger may be applied as the cascade heat exchanger. The hot water supply part 13 includes a water supply passage 131 through which water is supplied to supply hot water, the water supply storage part 132 in which the water supplied through the water supply passage 131 is stored, the hot water supply condenser 16 received into the water supply storage part 132 to heat the water using the first refrigerant, an auxiliary heating source 133 for aiding the heating of the water in case where a heating amount of the hot water supply condenser 16 is insufficiency, and a water discharge passage 134 supplying the heated water, i.e., the hot water to a user. For example, the water supply passage 131 may be connected to various water supply sources such as a water tank and a water supply. For example, the auxiliary heating source 133 may be various water heating sources such as an electric heater.

The heating part 14 includes the indoor heat exchanger 17 disposed adjacent to the indoor space to exchange heat between the second refrigerant and the indoor air. In more detail, the indoor heat exchanger 17 includes an air-conditioning heat exchanger 171 exchanging heat between the indoor air and the second refrigerant and a bottom heat exchanger 172 exchanging heat between an indoor bottom and the second refrigerant.

For example, the air-conditioning heat exchanger 171 may be various units such as a fan coil unit in which the indoor air is heated by the second refrigerant. Also, for example, the bottom heat exchanger 172 may be realized into various shapes such as a case in which a refrigerant pipe through which the second refrigerant flows is installed in the indoor bottom to heat the indoor bottom using the second refrigerant.

The air-conditioning heat exchanger 171 and the bottom heat exchanger 172 may be connected to each other in parallel in the second refrigerant cycle. In more detail, the second refrigerant pipe 120 is branched into two branch pipes 141 and 142 at one position between the second flow switch part 125 and the second expander 124 in the second refrigerant cycle. Then, the branch pipes 141 and 142 are jointed with each other at the other position between the second flow switch part 125 and the second expander 124 in the second refrigerant cycle. Also, the air-conditioning heat exchanger 171 may be installed on one 141 of the two branch pipes 141 and 142, and the bottom heat exchanger 172 may be installed on the other one 142 of the two branch pipes 141 and 142. Here, three-way valves 143 and 144 may be disposed in the one position at which the second refrigerant pipe 120 is branched into the two branch pipes 141 and 142 and the other position. The three-way valves 143 and 144 may switch a flow direction of the second refrigerant toward at least one of the two branch pipes 141 and 142 to allow the second refrigerant to selectively flow into the two branch pipes 141 and 142. That is, according to the switch states of the three-way valves 143 and 144, the second refrigerant may flow into one of the air-conditioning heat exchanger 171 and the bottom heat exchanger 172 or all of the air-conditioning heat exchanger 171 and the bottom heat exchanger 172.

On the other hand, the heating part 14 includes an air heating part 14 in which the indoor air is heated by the second refrigerant and a bottom heating part 14 in which the indoor bottom is heated by the second refrigerant. That is, the air heating part 14 represents the air-conditioning heat exchanger 171, and the bottom heating part 14 represents the bottom heat exchanger 172.

Hereinafter, a refrigerant flow in the hot water supply device associated with the heat pump according to the first embodiment will be described in detail with reference to the accompanying drawing.

Referring to Fig. 1, a refrigerant flow in case where the hot water supply device associated with the heat pump simultaneously is operated in a hot water supply mode and the heating mode at the same time will be described below.

First, in the first refrigerant circulation part 11, the first refrigerant discharged from the first compressor 111 sequentially flows into the hot water supply condenser 16 and the cascade condenser 15. Thus, the first refrigerant introduced into the hot water supply condenser 16 may be introduced at a relatively high-temperature when compared to the first refrigerant introduced into the first cascade condenser 15.

In more detail, the first refrigerant discharged from the first compressor 111 is primarily condensed in the hot water supply condenser 16 while heating the supplied water. The first refrigerant passing through the hot water supply condenser 16 is introduced into the cascade condenser 15 via the first flow switch part 115. Then, the first refrigerant is secondarily condensed in the cascade condenser 15 while transferring heat into the second refrigerant. The first refrigerant passing through the cascade condenser 15 is expanded while passing through the first expander 114. Then, the first refrigerant passes through the first flow switch part 115 and is introduced again into the first compressor 111.

Here, since the first refrigerant is primarily condensed in the hot water supply condenser 16 and then is introduced into the cascade condenser 15, the first refrigerant introduced into the hot water supply condenser 16 may have a temperature greater than that of the first refrigerant introduced into the cascade condenser 15.

Next, in the second refrigerant circulation part 12, the second refrigerant discharged from the second compressor 121 is introduced into the heating condenser 17 via the second flow switch part 125. The second refrigerant is condensed in the heating condenser 17 while transferring heat into the indoor air. Then, the second refrigerant is expanded while passing through the second expander 124 and then is introduced into the second evaporator 15. The second refrigerant introduced into the second evaporator 15 absorbs heat from the first refrigerant, and thus is evaporated. The second refrigerant passing through the second evaporator 15 is introduced again into the second compressor 121 via the second flow switch part 125.

Here, according to the switch states of the three-way valves 143 and 144, the second refrigerant may pass through one of the air heating part 14 and the bottom heating part 14 or all of the air heating part 14 and the bottom heating part 14. That is, in some cases, at least one of the heating of the indoor air and the heating of the indoor bottom may be selectively performed.

In the hot water supply part 13, the water stored in the water supply storage part 132 is heated by the first refrigerant to generate hot water. The heated water, i.e., the hot water may be supplied to the user through the water discharge passage 134. Also, in case where the water stored in the water supply storage part 132 is insufficient, water may be supplemented through the water supply passage 131.

Also, in case where a heating amount of the first refrigerant is insufficient for heating the water up to a target temperature, the auxiliary heating source 133 may be operated to aid the heating of the water. Here, the target temperature may represent an adequate hot water temperature used for the user or a temperature preset by the user or an installer.

The hot water supply device 1 associated with the heat pump includes a heat pump unit 10 including various units for the flow of the first refrigerant and the second refrigerant. In more detail, the heat pump unit 10 includes various units for the flow of the first refrigerant and the second refrigerant such as the first compressor 111, the second compressor 121, the outdoor heat exchanger 113, and the cascade heat exchanger 15. In the heat pump unit 10, the hot water supply part 13 and the heating part 14 are connected to the first refrigerant pipe 110 and the second refrigerant pipe 120, respectively. That is, the heat pump unit 10 circulates the first refrigerant and the second refrigerant to absorb heat from the indoor air and transfer the absorbed heat into the hot water supply part 13 and the heating part 14. Of cause, when the hot water supply device 1 associated with the heat pump is operated in the cooling mode, the circulation directions of the first refrigerant and the second refrigerant may be switched to absorb heat from the indoor air.

According to the present embodiment, there is an advantage that the hot water supply performance together with the heating performance may be improved.

In detail, generally, a hot water temperature required when the hot water is supplied is higher than an indoor air temperature required when the indoor air is heated. Also, in a general refrigerant cycle, a temperature of a refrigerant discharged from a compressor is the highest. In the present embodiment, the first refrigerant discharged from the first compressor 111 sequentially flows into the hot water supply condenser 16 and the cascade condenser 15. That is, the hot water supply is performed using the first refrigerant having the highest temperature in the first refrigerant cycle. Thus, the water within the hot water supply part 13 may be heated up to the possible highest temperature of the first refrigerant. That is, the hot water supply performance may be further improved.

Also, since the first refrigerant passing through the hot water supply condenser 16 is introduced into the cascade condenser 15, the first refrigerant introduced into the cascade condenser 15 has a temperature relatively less than that of the first refrigerant discharged from the first compressor 111. That is, when the indoor air is directly heated using the cascade condenser 15, the heating performance may be deteriorated when compared that the first refrigerant discharged from the first compressor 111 is directly introduced into the cascade condenser 15.

According to the present embodiment, since the indoor air is heated using the heating condenser 17 of the second refrigerant circulation part 12, the heating performance may be further improved. In more detail, according to the present embodiment, the heating is performed using a two-stage refrigerant cycle including the first refrigerant cycle and the first refrigerant cycle. That is, the heating is performed using the heating condenser 17 in which the second refrigerant discharged from the second compressor 121 flows. Also, in the two-stage refrigerant cycle, the first refrigerant discharged from the first compressor 111 has a temperature greater than that of the second refrigerant discharged from the second compressor 121. Thus, heating performance deterioration occurring when the first refrigerant sequentially flows into the hot water supply condenser 16 and the cascade condenser 15 may be compensated, and also, the heating performance may be improved when compared that the heating is performed using the first refrigerant discharged from the first compressor 111.

Also, according to the present embodiment, there is an advantage that the hot water supply is continuously performed regardless of the switching of the heating and cooling operations.

In detail, a flow of the refrigerant when the hot water supply device 1 associated with the heat pump performs the hot water supply operation and the cooling operation at the same time will described below. First, in the first refrigerant circulation part 11, the refrigerant discharged from the first compressor 111 sequentially flows into the hot water supply heat exchanger 16, the first flow switch part 115, the outdoor heat exchanger 113, the first expander 114, the cascade heat exchanger 15, and the first flow switch part 115.

Next, in the second refrigerant circulation part 12, the refrigerant discharged from the second compressor 121 sequentially flows into the second flow switch part 125, the cascade heat exchanger 15, the second expander 124, the indoor heat exchanger 17, and the second flow switch part 125. That is, according to the switch states of the first flow switch part 115 and the second flow switch part 125, the hot water supply device 1 associated with the heat pump may be operated to perform one of the heating mode and the cooling mode. Since the hot water supply heat exchanger 16, i.e., the hot water supply condenser 16 is disposed between the first compressor 111 and the first flow switch part 115 in the first refrigerant cycle, the first refrigerant discharged from the first compressor 111 may be introduced into the hot water supply heat exchanger 16, i.e., the hot water supply condenser 16 regardless of the switch state of the first flow switch part 115. In addition, since the first refrigerant discharged from the first compressor 111 is introduced into the hot water supply heat exchanger 16, i.e., the hot water supply condenser 16 regardless of the switch of the heating and cooling operations of the hot water supply device 1 associated with the heat pump, the hot water supply may be continuously performed.

Hereinafter, a hot water supply device associated with a heat pump according to a second embodiment will be described in detail with reference to the accompanying drawing. This embodiment is different from the first embodiment in that water to be supplied is heated using water heat-exchanged with a first refrigerant. In the present embodiment, description with respect to the same part as that of the first embodiment will be quoted from the description of the first embodiment.

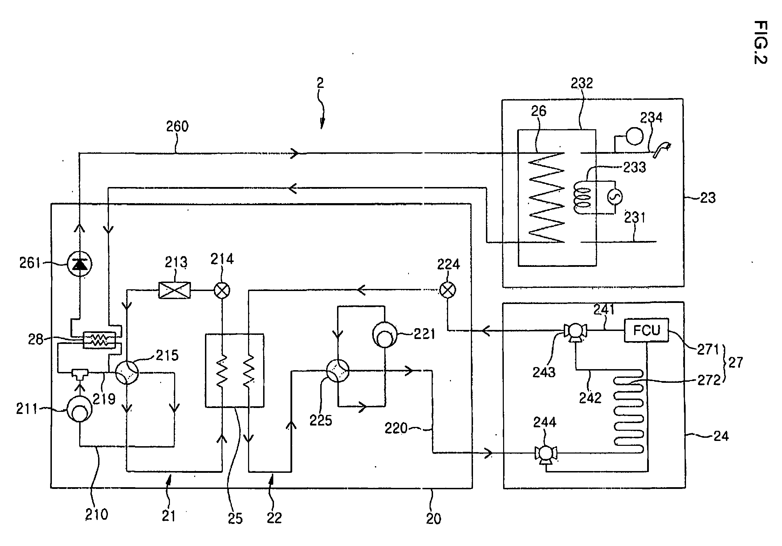

Fig. 2 is a schematic view of a hot water supply device associated with a heat pump according to a second embodiment. Referring to Fig. 2, in the present embodiment, water to be supplied is heated using water heat-exchanged with a first refrigerant.

In detail, according to the present embodiment, a hot water supply device 2 associated with a heat pump further includes a water refrigerant heat exchanger 281 exchanging heat between the first refrigerant and the water, a water pipe 260 in which the water heat-exchanged with the first refrigerant in the water refrigerant heat exchanger 281 is circulated, and a pump 261 for forcedly circulating the water within the water pipe 260. Since a portion of the water pipe 260 is received into a water supply storage part 232, the water flowing into the water pipe 260 may heat water stored in the water storage part 232. Here, the water refrigerant heat exchanger 281 and the pump 261 may be installed in a heat pump unit.

A water flow within the water pipe 260 will be described. In the water refrigerant heat exchanger 281, the water absorbing heat from the first refrigerant flows along the water pipe 260. Then, the water heats the water stored in the water supply storage part 232 while flowing into the portion of the water pipe 260 received into the water supply storage part 232, and then is introduced again into the water refrigerant heat exchanger 281 along the water pipe 260.

A first refrigerant circulation part 21 further includes the water refrigerant heat exchanger 281 installed on a first refrigerant pipe 210, a bypass pipe 219 bypassing the water refrigerant heat exchanger 281, and a hot water supply flow adjustment part 282 for adjusting an amount of the first refrigerant discharged from a first compressor 211 and introduced into the water refrigerant heat exchanger 281 and the bypass pipe 219. The hot water supply flow adjustment part 282 adjusts an amount of the refrigerant introduced into the water refrigerant heat exchanger 281 and an amount of the refrigerant flowing into the bypass pipe 219 of the first refrigerant discharged from the first compressor 211 to switch a hot water supply operation through the first refrigerant.

In more detail, in case where the hot water supply through the first refrigerant is performed, since the hot water supply flow adjustment part 282 intercepts a flow of the first refrigerant flowing toward the bypass pipe 219, the first refrigerant discharged from the first compressor 211 is introduced into the water refrigerant heat exchanger 281. Then, the heat of the first refrigerant is transferred into the water while passing through the water refrigerant heat exchanger 281, and thus is primarily condensed. The first refrigerant passing through the water refrigerant heat exchanger 281 is secondarily condensed while passing through a cascade heat exchanger 25 via a first flow switch part 215. Here, the water refrigerant heat exchanger 281 corresponds to a hot water supply condenser 281 in which the first refrigerant is primarily condensed while performing the hot water supply, and the cascade heat exchanger 25 corresponds to a cascade condenser 25 in which the heat of the first refrigerant is transferred into a second refrigerant, and thus, the first refrigerant is secondarily condensed.

In case where the hot water supply through the first refrigerant is not performed, for example, in case of an exclusive heating operation, since the hot water supply flow adjustment part 282 intercepts a flow of the first refrigerant flowing toward the water refrigerant heat exchanger 281, the first refrigerant discharged from the first compressor 211 bypasses the water refrigerant heat exchanger 281 and is introduced into the first flow switch part 215. The heat of the first refrigerant passing through the first flow switch part 215 is transferred into the second refrigerant while passing through the cascade heat exchanger 25, and thus, the first refrigerant is condensed.

According to the present embodiment, there is an advantage that the first refrigerant discharged from the first compressor 211 selectively flows into the water refrigerant heat exchanger 281 or the bypass pipe 219 to selectively perform the hot water supply function.

Also, the hot water supply and heating performance may be further improved. In more detail, when the hot water supply is required, the hot water supply flow adjustment part 282 may intercept the flow of the first refrigerant flowing toward the bypass pipe 219 to perform the hot water supply using the first refrigerant having the highest temperature in the first refrigerant cycle. That is, since a temperature of hot water supplied by the hot water supply operation is heated up to the possible highest temperature through the first refrigerant, the hot water supply function may be further improved.

When the exclusive heating operation is required, the hot water supply flow adjustment part 282 may intercept the flow of the first refrigerant flowing toward the water refrigerant heat exchanger 281 to directly introduce the first refrigerant discharged from the first compressor 211 into the cascade heat exchanger 25. Thus, a temperature of the first refrigerant introduced into the cascade heat exchanger 25 may be further increased when compared to a case in which the refrigerant discharged from the first compressor 211 passes through the water refrigerant heat exchanger 281 and then is secondarily condensed in the cascade heat exchanger 25. Therefore, the heating performance may be further improved when compared that the heating operation is performed by the first refrigerant passing through the water refrigerant heat exchanger 281. Here, for example, the case in which the exclusive heating operation is required may be a case in which an amount of the hot water heated and stored in the hot water supply part 23 is sufficient and a heating load is relatively large.

Also, according to the present embodiment, since the heat pump unit and the hot water supply part 23 are connected to the water pipe 260, but the refrigerant pipe, an amount of the first refrigerant flowing into the first refrigerant circulation part 21 may be reduced. Thus, an amount of the refrigerant required for the hot water supply may be minimized.

Also, since the water pipe 260 may be easily installed and replaced when compared to the refrigerant pipe, the hot water supply device 2 associated with the heat pump may be easily installed and replaced.

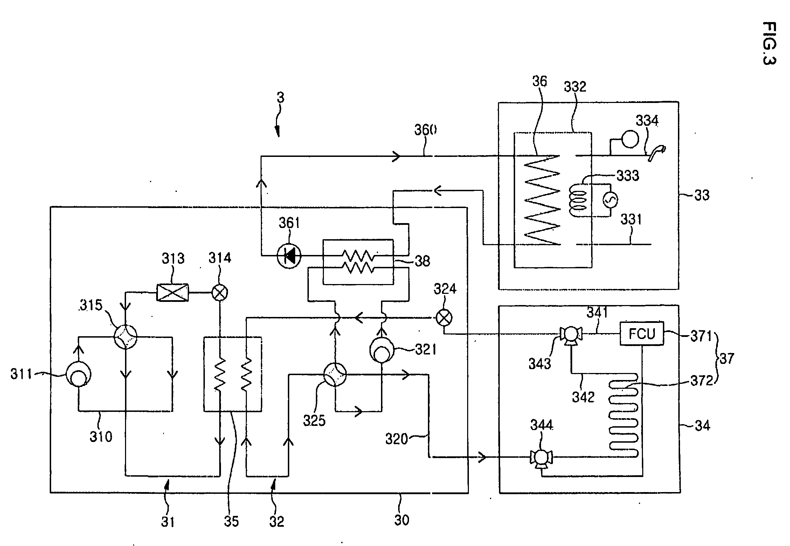

Hereinafter, a hot water supply device associated with a heat pump according to a third embodiment will be described in detail with reference to the accompanying drawing. This embodiment is different from the first embodiment in that hot water supply is performed using water heat-exchanged with a second refrigerant. In the present embodiment, description with respect to the same part as that of the first embodiment will be quoted from the description of the first embodiment. Fig. 3 is a schematic view of a hot water supply device associated with a heat pump according to a third embodiment. Referring to Fig. 3, in the present embodiment, a hot water supply is performed using water heat-exchanged with a second refrigerant.

In detail, according to the present embodiment, a hot water supply device 3 associated with a heat pump further includes a water refrigerant heat exchanger 38 exchanging heat between the high-temperature second refrigerant discharged from a second compressor 321 and the water, a water pipe 360 in which the water heat-exchanged with the second refrigerant in the water refrigerant heat exchanger 38 is circulated, and a pump 361 for forcedly circulating the water within the water pipe 360. Since a portion of the water pipe 360 is received into a water supply storage part 332, the water flowing into the water pipe 360 may heat water stored in the water storage part 332. Here, the water refrigerant heat exchanger 38 and the pump 361 may be installed in a heat pump unit 30.

A water flow within the water pipe 360 will be described. In the water refrigerant heat exchanger 38, the water absorbing heat from the first refrigerant flows along the water pipe 360. Then, the water heats the water stored in the water supply storage part 332 while flowing into the portion of the water pipe 360 received into the water supply storage part 332, and then is introduced again into the water refrigerant heat exchanger 38 along the water pipe 360.

A second refrigerant circulation part 32 further includes the water refrigerant heat exchanger 38 installed on a second refrigerant pipe 320. Here, the water refrigerant heat exchanger is installed between a second compressor 321 and a second flow switch part 325 in a second refrigerant cycle. Thus, the heat of the second refrigerant discharged from the second compressor 321 is transferred into the water while passing through the water refrigerant heat exchanger 38, and thus, the second refrigerant is primarily condensed. Then, the condensed second refrigerant is introduced into an indoor heat exchanger 37 via the second flow switch part 325. The heat of the second refrigerant is transferred into indoor air while passing through the indoor heat exchanger 37, and thus, the second refrigerant is secondarily condensed.

Here, the water refrigerant heat exchanger 38 corresponds to a hot water supply condenser 38 in which the second refrigerant is primarily condensed while performing the hot water supply, and the indoor heat exchanger 37 corresponds to a heating condenser 37 in which the heat of the second refrigerant is transferred into indoor air, and thus, the refrigerant is secondarily condensed.

That is, the present embodiment is different from the first embodiment in that the second refrigerant circulation part 32 includes the hot water supply condenser 38.

In the first refrigerant circulation part 31, a first refrigerant discharged from a first compressor 311 is directly introduced into a cascade heat exchanger 35 via a first flow switch part 315.

According to the present embodiment, the hot water supply performance may be further improved. In more detail, in first and second refrigerant cycles, the second refrigerant discharged from the second compressor 321 has a temperature greater than that of the first refrigerant discharged from the first compressor 311. In the present embodiment, since the hot water supply is performed using the second refrigerant discharged from the second compressor 321, but the first refrigerant discharged from the first compressor 311, the hot water supply performance may be relatively further improved.

Also, according to the present embodiment, since the heat pump unit 30 and the hot water supply part 33 are connected to the water pipe 360, but the refrigerant pipe, an amount of the second refrigerant flowing into the second refrigerant circulation part 32 may be reduced. Thus, an amount of the refrigerant required for the hot water supply may be minimized.

Also, since the water pipe 360 may be easily installed and replaced when compared to the refrigerant pipe, the hot water supply device 3 associated with the heat pump may be easily installed and replaced.

Hereinafter, a hot water supply device associated with a heat pump according to a fourth embodiment will be described in detail with reference to the accompanying drawing. This embodiment is different from the first embodiment in that hot water supply is performed using a first refrigerant as well as a second refrigerant. In the present embodiment, description with respect to the same part as that of the first embodiment will be quoted from the description of the first embodiment.

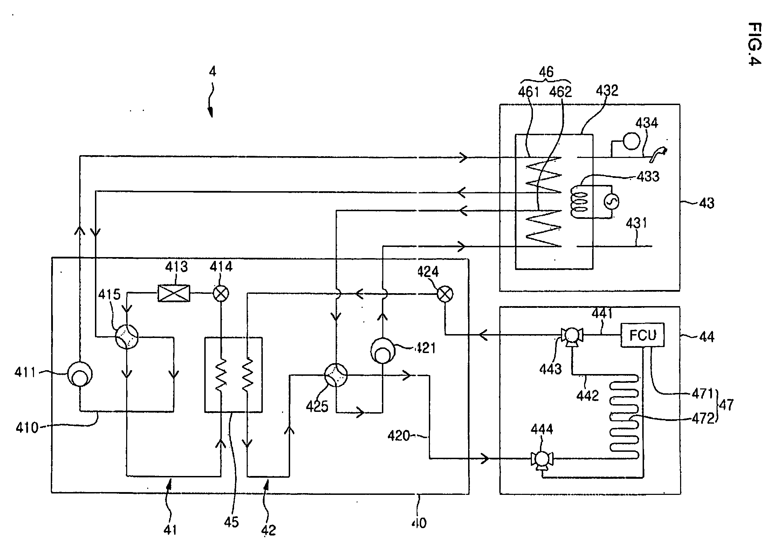

Fig. 4 is a schematic view of a hot water supply device associated with a heat pump according to a fourth embodiment. Referring to Fig. 4, in the present embodiment, hot water supply is performed using a first refrigerant and a second refrigerant.

In detail, a first refrigerant circulation part 41 includes a first hot water supply condenser 461 in which heat is transferred from the first refrigerant to water. A second refrigerant circulation part 42 includes a second hot water supply condenser 462 in which heat is transferred from the second refrigerant to water. Here, the second hot water supply condenser 462 may correspond to an auxiliary hot water supply condenser 462 in that the hot water supply is performed using the second hot water supply condenser 462 together with the first hot water supply condenser 461.

Here, the second hot water supply condenser 462 is installed between a second compressor 421 and a second flow switch part 425 in a second refrigerant cycle. Thus, the heat of the second refrigerant discharged from the second compressor 421 is transferred into water while passing through the second hot water supply condenser 462, and thus, the second refrigerant is primarily condensed. Then, the condensed second refrigerant is introduced into a heating condenser 47 via the second flow switch part 425. The heat of the second refrigerant is transferred into indoor air while passing through the heating condenser 47, and thus, the second refrigerant is secondarily condensed.

Similarly, the first hot water supply condenser 461 is installed between a first compressor 411 and a first flow switch part 415 in the first refrigerant cycle.

Here, the first hot water supply condenser 461 corresponds to a first hot water heat exchanger 461 in which a portion of a first refrigerant pipe 410 is received into a water supply storage part 432, and the second hot water supply condenser 462 corresponds to a second hot water heat exchanger 462 in which a portion of a second refrigerant pipe 420 is received into the water supply storage part 432.

According to the present embodiment, the hot water supply performance may be improved. In more detail, since the water is heated by the second refrigerant as well as the first refrigerant, a heating amount for heating the water may be increased. Thus, the whole hot water supply performance may be improved.

Furthermore, in the first and second refrigerant cycles, the second refrigerant discharged from the second compressor 421 has a temperature greater than that of the first refrigerant discharged from the first compressor 411. That is, since the water is heated by the second refrigerant having the temperature greater than that of the first refrigerant as well as the first refrigerant, the hot water supply performance may be further improved.

Hereinafter, a hot water supply device associated with a heat pump according to a fifth embodiment will be described in detail with reference to the accompanying drawing. This embodiment is different from the first embodiment in that hot water supply and heating operations are continuously performed during a defrosting operation. In the present embodiment, description with respect to the same part as that of the first embodiment will be quoted from the description of the first embodiment.

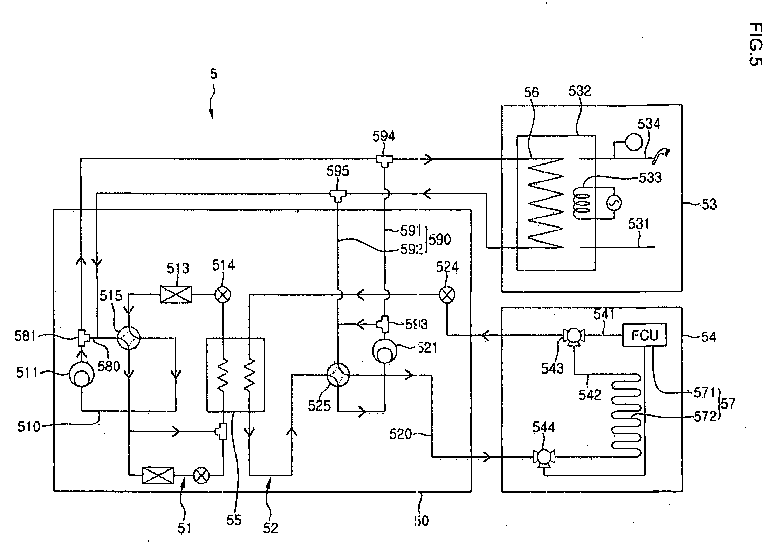

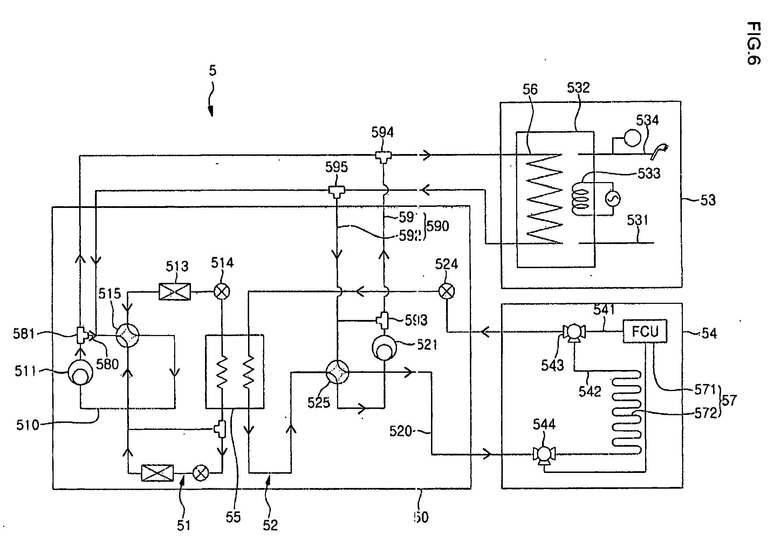

Fig. 5 is a schematic view illustrating a refrigerant flow in case where a hot water supply device associated with a heat pump performs an ordinary operation according to a fifth embodiment, and Fig. 6 is a schematic view illustrating a refrigerant flow in case where the hot water supply device associated with the heat pump performs a defrosting operation according to the fifth embodiment.

Referring to Figs. 5 and 6, in the present embodiment, hot water supply and heating operations may be continuously performed during a defrosting operation.

In detail, a first refrigerant circulation part 51 includes a bypass pipe 580 for guiding a first refrigerant to bypass a hot water supply condenser 56 and a first hot water supply flow adjustment part 581 for adjusting an amount of the first refrigerant discharged from a first compressor 511 and introduced into the hot water supply condenser 56 and an amount of the first refrigerant flowing into the bypass pipe 580.

Also, in the present embodiment, a hot water supply device 5 associated with a heat pump includes an auxiliary hot water supply pipe 590 connecting a first refrigerant circulation part 51 and a second refrigerant circulation part 52 to each other. The auxiliary hot water supply pipe 590 includes a first auxiliary hot water supply pipe 590 connecting one position of a second refrigerant pipe 520 corresponding to a discharge side of a second compressor 521 and one position of a first refrigerant pipe 510 corresponding to an inflow side of the hot water supply condenser 56 to each other and a second auxiliary hot water supply pipe 590 connecting the other position of the first refrigerant pipe 510 corresponding to a discharge side of the hot water supply condenser 56 and the other position of the second refrigerant pipe 520 corresponding to an inflow side of a second flow switch part 525 to each other.

A second hot water supply flow adjustment part 593 for adjusting an amount of the second refrigerant discharged from the second compressor 521 and introduced into a hot water supply part 53 through the first auxiliary hot water supply pipe 590 and an amount of the second refrigerant directly introduced into the second flow switch part 525 is installed at the one position of the second refrigerant pipe 520 connected to the first auxiliary hot water supply pipe 590. Also, a third hot water supply flow adjustment part 594 and a fourth hot water supply flow adjustment part 595 for adjusting amounts of the first and second refrigerants introduced into the hot water supply condenser 56 are installed at the one position of the first refrigerant pipe 510 connected to the first auxiliary hot water supply pipe 590 and the other position of the first refrigerant pipe 510 connected to the second auxiliary hot water supply pipe 590, respectively.

According to the present embodiment, the hot water supply device 5 associated with the heat pump further includes an auxiliary heat exchanger 582 used as an evaporator, instead of an outdoor heat exchanger 513 during a defrosting operation, an auxiliary expander 583 in which the first refrigerant is expanded, instead of a first expander 514 during the defrosting operation, an auxiliary refrigerant pipe 584 for bypassing the first refrigerant of the first refrigerant pipe 510 into the auxiliary heat exchanger 582 and the auxiliary expander 583, and an auxiliary flow adjustment part 585 for controlling the first refrigerant to flow along the first refrigerant pipe 510 or for bypassing the first refrigerant into the auxiliary refrigerant pipe 584. A refrigerant flow according to the present embodiment will be described with reference to Fig. 5. First, when the hot water supply device 5 associated with the heat pump performs an ordinary operation, a refrigerant flow equal to that of the first embodiment is performed. Here, the ordinary operation includes hot water supply, heating, and cooling operations. Also, when the hot water supply device 5 associated with the heat pump performs the ordinary operation, a flow of the first refrigerant through the bypass pipe 580 is intercepted by the first hot water supply flow adjustment part 581, and a flow of the second refrigerant through the auxiliary hot water supply pipe 590 is intercepted by the second hot water supply flow adjustment part 593, the third hot water supply flow adjustment part 594, and the fourth hot water supply flow adjustment part 595. Also, a flow of the first refrigerant through the auxiliary refrigerant pipe 584 is intercepted by the auxiliary flow adjustment part 585. Referring to Fig. 6, when the hot water supply device 5 associated with the heat pump performs an defrosting operation, a flow of the first refrigerant flowing toward the hot water supply condenser 56 is intercepted by the first hot water supply flow adjustment part 581, and a flow of the refrigerant directly introduced from the second compressor 521 into the second flow switch part 525 is intercepted by the second hot water supply flow adjustment part 593. Also, a flow of the first refrigerant flowing toward the hot water supply condenser 56 is intercepted by the third hot water supply flow adjustment part 594 and the fourth hot water supply flow adjustment part 595, and simultaneously, the hot water supply condenser 56 and the second refrigerant pipe 520 communicate with each other to bypass the second refrigerant into the hot water supply condenser 56. Also, the first refrigerant of the first refrigerant pipe 510 is bypassed by the auxiliary flow adjustment part 585 to pass through the auxiliary heat exchanger 582 and the auxiliary expander 583 along the auxiliary refrigerant pipe 584.

Thus, the first refrigerant discharged from the first compressor 511 is directly introduced into the first flow switch part 515 and passes through the first flow switch part 515, and then, is introduced into the outdoor heater exchanger 513. The first refrigerant is primarily condensed during the defrosting operation while passing through the outdoor heat exchanger 513. Then, the heat of the first refrigerant is transferred into the second refrigerant while passing through the cascade heat exchanger 55, and thus, the first refrigerant is secondarily condensed. The first refrigerant passing through the cascade heat exchanger 55 is expanded in the auxiliary expander 583, and then absorbs heat from an outdoor air while passing through the auxiliary heat exchanger 582, and thus is evaporated. Here, the first expander 514 is opened to prevent the first refrigerant from being expanded, and the auxiliary expander 583 is partially opened to expand the first refrigerant. The first refrigerant passing through the auxiliary heat exchanger 582 is introduced again into the first compressor 511 via the first flow switch part 515.

The second refrigerant discharged from the second compressor 521 is introduced into the hot water supply condenser 56 through the first auxiliary hot water supply pipe 590. The second refrigerant is primarily condensed while passing through the hot water supply condenser 56, and then, is introduced into the second flow switch part 525 through the second auxiliary hot water supply pipe 590. The second refrigerant passing through the second flow switch part 525 is secondarily condensed while passing through an indoor heat exchanger 57 and is expanded in the second expander 524. Thereafter, the second refrigerant absorbs heat from the first refrigerant in the cascade heat exchanger 55, and thus is evaporated.

That is, the hot water supply is performed using the first refrigerant during the ordinary operation, and the hot water supply is performed using the second refrigerant during the defrosting operation. In addition, the refrigerant flowing into the hot water supply condenser 56 is compressed by the first compressor 511 during the ordinary operation, and the refrigerant flowing into the hot water supply condenser 56 is compressed by the second compressor 521 during the defrosting operation.

Thus, according to the present embodiment, the hot water supply and heating operations may be continuously performed during the defrosting operation.

Hereinafter, a hot water supply device associated with a heat pump according to a sixth embodiment will be described in detail with reference to the accompanying drawing. This embodiment is different from the first embodiment in that a heating operation is performed using water heat-exchanged with a second refrigerant. In the present embodiment, description with respect to the same part as that of the first embodiment will be quoted from the description of the first embodiment.

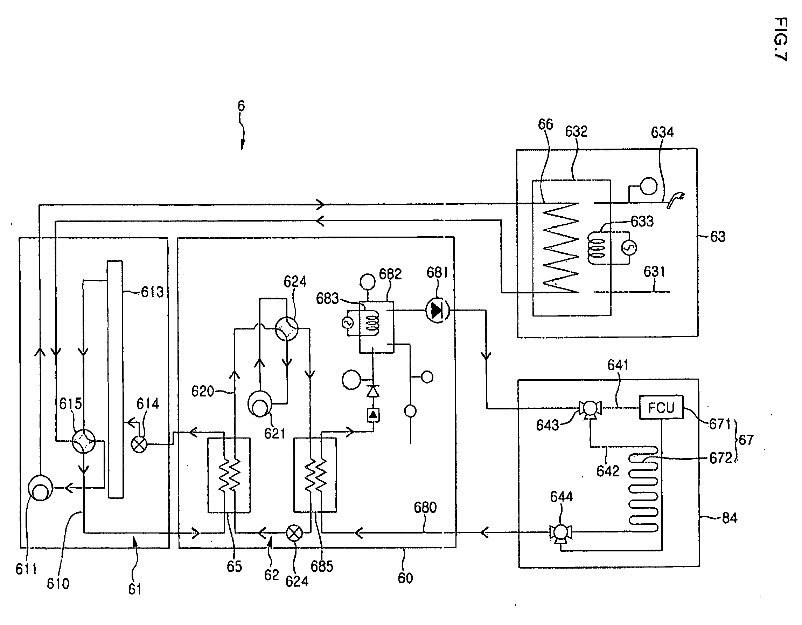

Fig. 7 is a schematic view of a hot water supply device associated with a heat pump according to a sixth embodiment. Referring to Fig. 7, in the present embodiment, a heating operation is performed using water heat-exchanged with a second refrigerant.

In detail, according to the present embodiment, a hot water supply device 6 associated with a heat pump further includes a water refrigerant heat exchanger 685 exchanging heat between a high-temperature second refrigerant discharged from a second compressor 621 and water, a water pipe 680 in which the water heat-exchanged with the second refrigerant in the water refrigerant heat exchanger 685 is circulated, and a pump 681 for forcedly circulating the water within the water pipe 680. An indoor heat exchanger 67 may be disposed at a side of the water pipe 680 to heat the water flowing into the indoor heat exchanger 67. In more detail, the indoor heat exchanger 67 includes an air-conditioning heat exchanger 671 exchanging heat between indoor air and the water and a bottom heat exchanger 672 exchanging heat between an indoor bottom and the water. The water flowing into the air-conditioning heat exchanger 671 may heat the indoor air, and the water flowing into the bottom heat exchanger 672 may heat the indoor bottom.

A water flow within the water pipe 680 will be described. In the water refrigerant heat exchanger 685, the water absorbing heat from the second refrigerant flows along the water pipe 680. Then, the heat of the water is transferred into the indoor air while passing through the indoor heat exchanger 67, and then, the water is introduced again into the water refrigerant heat exchanger 685 along the water pipe 680. Here, the water refrigerant heat exchanger 685 corresponds to a heating condenser 685 in which the second refrigerant heats the water for heating and is condensed.

A flow switch 686 for detecting a water flow, an expansion tank 687 for buffering a water volume change, and a water collection tank 682 including an auxiliary heater therein may be further disposed on the water pipe 680. An air vent 688 for discharging overheated air is disposed in an upper side of the water collection tank 682, an pressure gauge 689 for displaying a pressure within the water collection tank 682, and a relief valve for adjusting the pressure within the water collection tank 682 when the pressure within the water collection tank 682 is excessively high may be disposed at a side of the water collection tank 682. Here, the water refrigerant heat exchanger 685, the pump 681, the flow switch 686, the expansion tank 687, the water collection tank 682 may be disposed in a heat pump unit.

A refrigerant flow according to the present embodiment is equal to that of the first embodiment.

According to the present embodiment, since the heat pump unit and a heating part 84 are connected to the water pipe 680, but a refrigerant pipe, an amount of the second refrigerant flowing into the second refrigerant circulation part 62 may be reduced. Thus, an amount of the refrigerant required for the hot water supply may be minimized.

Also, since the water pipe 680 may be easily installed and replaced when compared to the refrigerant pipe, the hot water supply device 6 associated with the heat pump may be easily installed and replaced.

Hereinafter, a hot water supply device associated with a heat pump according to a seventh embodiment will be described in detail with reference to the accompanying drawing. This embodiment is different from the sixth embodiment in that hot water supply and heating operations are continuously performed during a defrosting operation. In the present embodiment, description with respect to the same part as that of the sixth embodiment will be quoted from the description of the sixth embodiment.

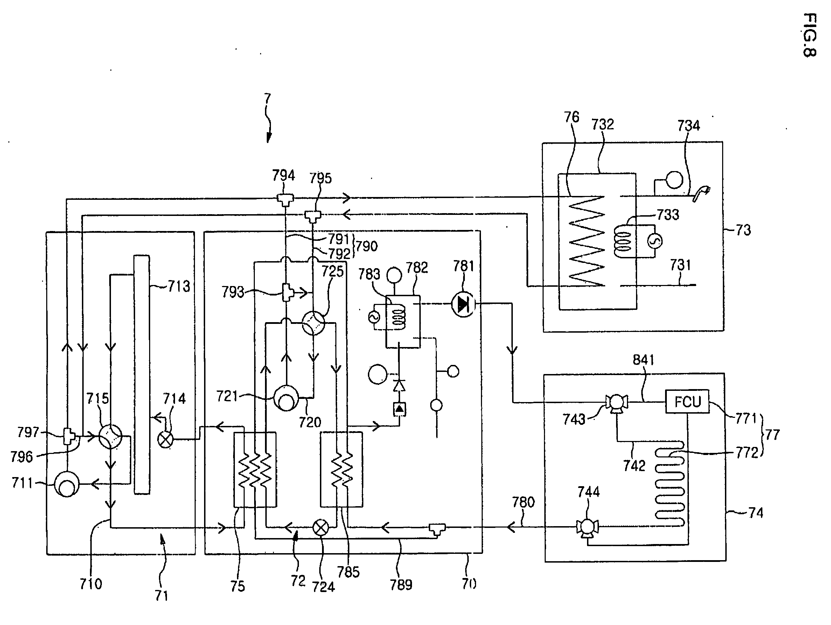

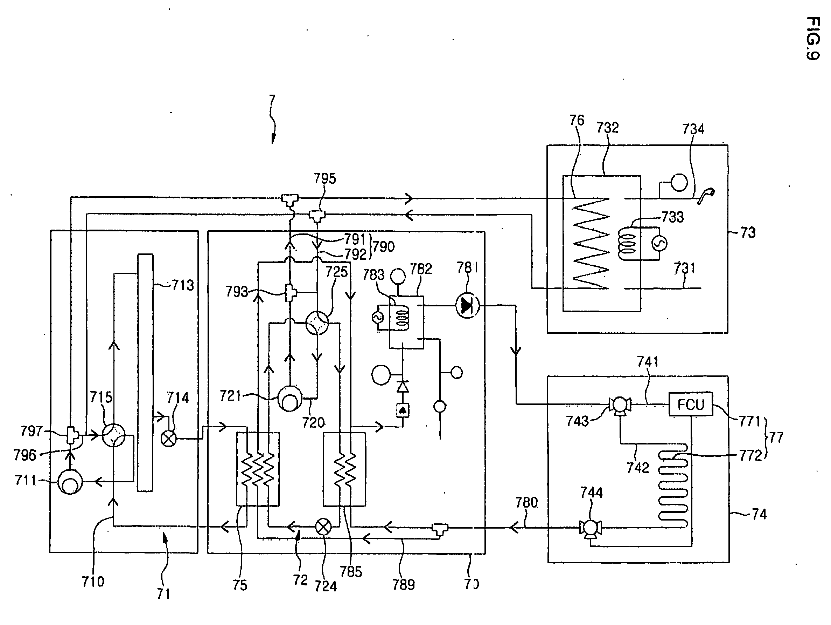

Fig. 8 is a schematic view illustrating a refrigerant flow in case where a hot water supply device associated with a heat pump performs an ordinary operation according to a seventh embodiment, and Fig. 9 is a schematic view illustrating a refrigerant flow in case where the hot water supply device associated with the heat pump performs a defrosting operation according to the seventh embodiment.

Referring to Figs. 8 and 9, in the present embodiment, hot water supply and heating operations may be continuously performed during a defrosting operation.

In detail, a first refrigerant circulation part 71 includes a bypass pipe 796 for guiding a first refrigerant to bypass a hot water supply condenser 76 and a first hot water supply flow adjustment part 797 for adjusting an amount of the first refrigerant discharged from a first compressor 711 and introduced into the hot water supply condenser 76 and an amount of the first refrigerant flowing into the bypass pipe 796.

Also, in the present embodiment, a hot water supply device 7 associated with a heat pump includes an auxiliary hot water supply pipe 790 connecting a first refrigerant circulation part 71 and a second refrigerant circulation part 72 to each other. The auxiliary hot water supply pipe 790 includes a first auxiliary hot water supply pipe 790 connecting one position of a second refrigerant pipe 720 corresponding to a discharge side of a second compressor 721 and one position of a first refrigerant pipe 710 corresponding to an inflow side of the hot water supply condenser 76 to each other and a second auxiliary hot water supply pipe 790 connecting the other position of the first refrigerant pipe 710 corresponding to a discharge side of the hot water supply condenser 76 and the other position of the second refrigerant pipe 720 corresponding to an inflow side of a second flow switch part 725 to each other.

A second hot water supply flow adjustment part 793 for adjusting an amount of the second refrigerant discharged from the second compressor 721 and introduced into a hot water supply part 73 through the first auxiliary hot water supply pipe 790 and an amount of the second refrigerant directly introduced into the second flow switch part 725 is installed at the one position of the second refrigerant pipe 720 connected to the first auxiliary hot water supply pipe 790. Also, a third hot water supply flow adjustment part 794 and a fourth hot water supply flow adjustment part 795 for adjusting amounts of the first and second refrigerants introduced into the hot water supply condenser 76 are installed at the one position of the first refrigerant pipe 710 connected to the first auxiliary hot water supply pipe 790 and the other position of the first refrigerant pipe 710 connected to the second auxiliary hot water supply pipe 790, respectively.

According to the present embodiment, the hot water supply device 7 associated with the heat pump further include a bypass water pipe 789 for bypassing the water passing through a heating part 74 into a cascade heat exchanger 75 during the defrosting operation and a water flow adjustment part 788 for adjusting an amount of the water flowing toward the water refrigerant heat exchanger 785 and the cascade heat exchanger 75. In more detail, the bypass water pipe 789 is branched at one position of a water pipe 780 corresponding between an indoor heat exchanger 77 and the water refrigerant heat exchanger 785 and is jointed with each other at the other position of the water pipe 780 corresponding to a discharge side of the water refrigerant heat exchanger 785. The cascade heat exchanger 75 includes a first refrigerant passage 751 in which a first refrigerant flows, a second refrigerant passage 752 in which a second refrigerant flows, and a water passage 735 in which water flows to exchange heat with the first refrigerant flowing into the first refrigerant passage 751 and the second refrigerant flowing into the second refrigerant passage 752. Here, the cascade heat exchanger 75 is installed at a side of the water pipe 780 to allow both ends of the water passage 753 to communicate with bypass water pipe 789. Also, the water flow adjustment part 788 may be installed at one position of the water pipe 780 at which the bypass water pipe 789 is branched.

A refrigerant flow according to the present embodiment will be described with reference to Fig. 8. First, when the hot water supply device 7 associated with the heat pump performs an ordinary operation, a refrigerant flow equal to that of the first embodiment is performed. Here, the ordinary operation includes hot water supply, heating, and cooling operations. Also, when the hot water supply device 7 associated with the heat pump performs the ordinary operation, a flow of the first refrigerant through the bypass pipe 796 is intercepted by the first hot water supply flow adjustment part 797, and a flow of the second refrigerant through the auxiliary hot water supply pipe 790 is intercepted by the second hot water supply flow adjustment part 793, the third hot water supply flow adjustment part 794, and the fourth hot water supply flow adjustment part 795. Also, a flow of the bypass water pipe 789 is intercepted by the water flow adjustment part 788.

Referring to Fig. 9, when the hot water supply device 7 associated with the heat pump performs an defrosting operation, a flow of the first refrigerant flowing toward the hot water supply condenser 76 is intercepted by the first hot water supply flow adjustment part 797, and a flow of the refrigerant directly introduced from the second compressor 721 into the second flow switch part 725 is intercepted by the second hot water supply flow adjustment part 793. Also, a flow of the first refrigerant flowing toward the hot water supply condenser 76 is intercepted by the third hot water supply flow adjustment part 794 and the fourth hot water supply flow adjustment part 795, and simultaneously, the hot water supply condenser 76 and the second refrigerant pipe 720 communicate with each other to bypass the second refrigerant into the hot water supply condenser 76. Also, the water passing through the indoor heat exchanger 77, i.e., the heating part 74 is bypassed by the water flow adjustment part 788 to pass through the cascade heat exchanger 75 along the bypass water pipe 789.

Thus, the first refrigerant discharged from the first compressor 711 is directly introduced into the first flow switch part 715 and passes through the first flow switch part 715, and then, is introduced into the outdoor heater exchanger 713. The first refrigerant is condensed during the defrosting operation while passing through the outdoor heat exchanger 713. Then, the first refrigerant is expanded while passing through a first expander 714. The first refrigerant passing through the first expander 714 absorbs heat from the water while passing through the cascade heat exchanger 75, and thus is evaporated. The first refrigerant passing through the cascade heat exchanger 75 is introduced again into the first compressor 711 via the first flow switch part 715.

The second refrigerant discharged from the second compressor 721 is introduced into the hot water supply condenser 76 through the first auxiliary hot water supply pipe 790. The second refrigerant is primarily condensed while passing through the hot water supply condenser 76, and then, is introduced into the second flow switch part 725 through the second auxiliary hot water supply pipe 790. The second refrigerant passing through the second flow switch part 725 is secondarily condensed while passing through an indoor heat exchanger 77 and is expanded in the second expander 724. Thereafter, the second refrigerant absorbs heat from the water in the cascade heat exchanger 75, and thus is evaporated.

That is, the hot water supply is performed using the first refrigerant during the ordinary operation, and the hot water supply is performed using the second refrigerant during the defrosting operation. In addition, the refrigerant flowing into the hot water supply condenser 76 is compressed by the first compressor 711 during the ordinary operation, and the refrigerant flowing into the hot water supply condenser 76 is compressed by the second compressor 721 during the defrosting operation. Also, during the defrosting operation, the first refrigerant and the second refrigerant absorb heat from the water passing through the heating part 74 in the cascade heat exchanger 75, and thus are continuously evaporated.

Thus, according to the present embodiment, the hot water supply and heating operations may be continuously performed during the defrosting operation.

Hereinafter, a hot water supply device associated with a heat pump according to a eighth embodiment will be described in detail with reference to the accompanying drawing. This embodiment is different from the first embodiment in that a constitution for injecting a vapor refrigerant is added. In the present embodiment, description with respect to the same part as that of the first embodiment will be quoted from the description of the first embodiment.

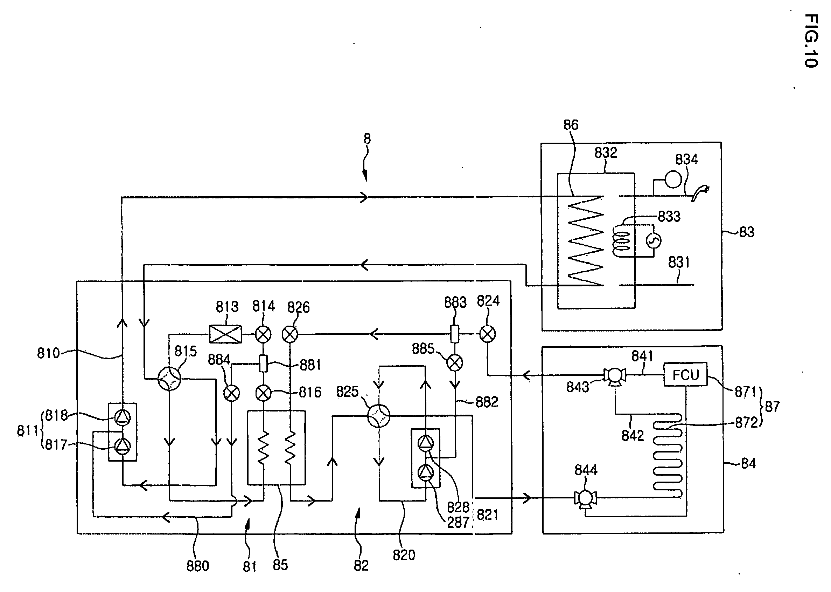

Fig. 10 is a schematic view of a hot water supply device associated with a heat pump according to an eighth embodiment. Referring to Fig. 10, in the present embodiment, to increase hot water supply and heating performance, a vapor refrigerant of a refrigerant passing through each of condensers 85 and 87 of a first refrigerant circulation part 81 and a second refrigerant circulation part 82 is injected into each of compressors 811 and 821.

In detail, the first compressor 811 includes a first lower end compression part 817 in which a first refrigerant is compressed and a first intermediate compression part 811 in which the first refrigerant passing through the first lower end compression part 817 is compressed. The second compressor 821 includes a second lower end compression part 827 in which a second refrigerant is compressed and a second intermediate compression part 828 in which the second refrigerant passing through the second lower end compression part 827 is compressed. That is, the first compressor 811 and the second compressor 821 is provided with a multi-stage compressor including a plurality of compression parts.

The first refrigerant circulation part 81 includes a first phase separator 881 separating the refrigerant flowing between an outdoor heat exchanger 813 and a cascade heat exchanger 85 in a first refrigerant cycle into a vapor refrigerant and a liquid refrigerant, a first injection pipe 880 for guiding the vapor refrigerant separated by the first phase separator 881 into the first intermediate compression part 818, and first and second expanders 814 and 816 disposed both sides of the first phase separator 881 in the first refrigerant cycle.

The second refrigerant circulation part 82 includes a second phase separator 883 separating the refrigerant flowing between the cascade heat exchanger 85 and an indoor heat exchanger 87 in a second refrigerant cycle into a vapor refrigerant and a liquid refrigerant, a second injection pipe 882 for guiding the vapor refrigerant separated by the second phase separator 883 into the second intermediate compression part 828, and third and fourth expanders 824 and 826 disposed both sides of the second phase separator 883 in the second refrigerant cycle.

A refrigerant flow according to the present embodiment will be described. When a hot water supply device 8 associated with a heat pump performs a heating operation, the first refrigerant passing through the cascade heat exchanger 85 and flowing toward the outdoor heat exchanger 813 is separated into a vapor refrigerant and a liquid refrigerant by the first phase separator. The first refrigerant separated by the first phase separator 881 is introduced into the first intermediate compression part 818 along the first injection pipe 880.

Also, the first liquid refrigerant separated by the phase separator 881 passes through the outdoor heat exchanger 813 and is introduced into the first lower end compression part 817. The first refrigerant compressed by the first lower end compression part 817 is introduced the first intermediate compression part 818 together with the first vapor refrigerant introduced through the first injection pipe 880. The first refrigerant passing through the indoor heat exchanger 87 and flowing toward the cascade heat exchanger 85 is separated into a vapor refrigerant and a liquid refrigerant by the second phase separator 883. The second vapor refrigerant separated by the second phase separator 883 is introduced into the second intermediate compression part 828 along the second injection pipe 882.

Also, the second liquid refrigerant separated by the second phase separator 883 passes through the cascade heat exchanger 85 and is introduced into the second lower end compression part 827. The second refrigerant compressed by the second lower end compression part 827 is introduced into the second intermediate compression part 828 together with the second vapor refrigerant introduced through the second injection pipe 882.

Here, a pressure within the first phase separator 881 may be called a first middle pressure, and a pressure within the second phase separator 883 may be called a second middle pressure. The first middle pressure may be adjusted by adjusting an open degree of the first expander 814, and the second middle pressure may be adjusted by adjusting an open degree of the second expander 816. Since the first and second expanders 814 and 816 are adjusted in open degree to allow the first and second middle pressures to reach a preset middle pressure, the whole efficiency may be improved by reducing a work consumed in the compressors 811 and 821. Also, since the first refrigerant is injected to increase a flowrate of the refrigerant passing through the cascade heat exchanger 85 and the second refrigerant is injected to increase a flowrate of the refrigerant passing through the indoor heat exchanger 87, the heating performance may be further improved.

A first injection valve 884 for selectively intercepting a flow of the first refrigerant through the first injection pipe 880 is installed on the first injection pipe 880, and a second injection valve 885 for selectively intercepting a flow of the second refrigerant through the second injection pipe 882 is installed on the second injection pipe 882. Thus, the first refrigerant and the second refrigerant may be selectively injected according to a lode change of the hot water supply and heating operation.

Hereinafter, a hot water supply device associated with a heat pump according to a ninth embodiment will be described in detail with reference to the accompanying drawing. This embodiment is different from the eighth embodiment in that a heating operation is performed using water heat-exchanged with a second refrigerant. In the present embodiment, description with respect to the same part as that of the eighth embodiment will be quoted from the description of the eighth embodiment.

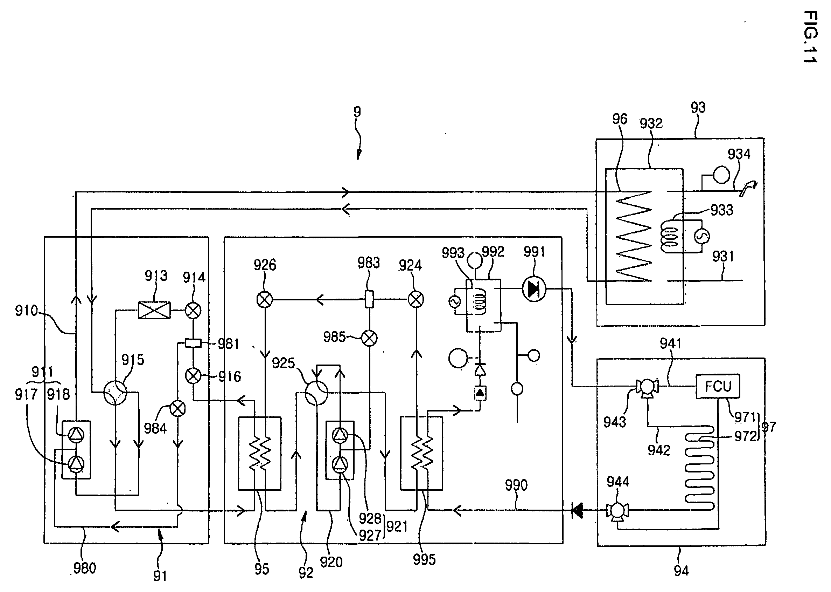

Fig. 11 is a schematic view of a hot water supply device associated with a heat pump according to a ninth embodiment. Referring to Fig. 11, in the present embodiment, a heating operation is performed ,using water heat-exchanged with a second refrigerant.

In detail, according to the present embodiment, a hot water supply device 6 associated with a heat pump further includes a water refrigerant heat exchanger 995 exchanging heat between a high-temperature second refrigerant discharged from a second compressor 921 and water, a water pipe 990 in which the water heat-exchanged with the second refrigerant in the water refrigerant heat exchanger 995 is circulated, and a pump 991 for forcedly circulating the water within the water pipe 990. An indoor heat exchanger 97 may be disposed at a side of the water pipe 990 to heat the water flowing into the indoor heat exchanger 97. In more detail, the indoor heat exchanger 97 includes an air-conditioning heat exchanger 971 exchanging heat between indoor air and the water and a bottom heat exchanger 972 exchanging heat between an indoor bottom and the water. The water flowing into the air-conditioning heat exchanger 971 may heat the indoor air, and the water flowing into the bottom heat exchanger 972 may heat the indoor bottom.

A water flow within the water pipe 990 will be described. In the water refrigerant heat exchanger 995, the water absorbing heat from the second refrigerant flows along the water pipe 990. Then, the heat of the water is transferred into the indoor air while passing through the indoor heat exchanger 97, and then, the water is introduced again into the water refrigerant heat exchanger 995 along the water pipe 990. Here, the water refrigerant heat exchanger 995 corresponds to a heating condenser 995 in which the second refrigerant heats the water for heating and is condensed.

A flow switch 986 for detecting a water flow, an expansion tank 987 for buffering a water volume change, and a water collection tank 992 including an auxiliary heater therein may be further disposed on the water pipe 990. An air vent 988 for discharging overheated air is disposed in an upper side of the water collection tank 992, an pressure gauge 989 for displaying a pressure within the water collection tank 992, and a relief valve for adjusting the pressure within the water collection tank 992 when the pressure within the water collection tank 992 is excessively high may be disposed at a side of the water collection tank 992. Here, the water refrigerant heat exchanger 995, the pump 991, the flow switch 986, the expansion tank 987, the water collection tank 992 may be disposed in a heat pump unit.

A refrigerant flow according to the present embodiment is equal to that of the eighth embodiment.

According to the present embodiment, since the heat pump unit and a heating part 97 are connected to the water pipe 990, but a refrigerant pipe, an amount of the second refrigerant flowing into the second refrigerant circulation part 92 may be reduced. Thus, an amount of the refrigerant required for the hot water supply may be minimized.

Also, since the water pipe 990 may be easily installed and replaced when compared to the refrigerant pipe, the hot water supply device 9 associated with the heat pump may be easily installed and replaced.

## Claims

1. A hot water supply device (1, 2, 3, 4, 5, 6, 7, 8, 9) comprising a heat pump unit (10, 20, 30, 40, 50, 60, 70), the heat pump unit including:
a first refrigerant circulation part (11, 21, 31, 41, 51, 61, 71, 81, 91) in which a first refrigerant cycle using a first refrigerant is performed, the first refrigerant circulation part (11, 21, 31, 41, 51, 61, 71, 81, 91) comprising a first compressor (111. 211, 311. 411, 511. 611. 711, 811, 911) compressing the first refrigerant, an outdoor heat exchanger (113, 213, 313, 413, 513, 613, 713, 813, 913) that performs heat exchange between the first refrigerant and outdoor air, and a first refrigerant pipe (110, 210, 310, 410, 510, 610, 710, 810, 910) in which the first refrigerant flows; and
a second refrigerant circulation part (12, 22, 32, 42, 52, 62, 72, 82, 92) in which a second refrigerant cycle using the second refrigerant heat-exchanged with the first refrigerant is performed, the second refrigerant circulation part comprising a second compressor (121, 221, 321, 421, 521, 621, 721, 821, 921) compressing the second refrigerant and a second refrigerant pipe (120, 220, 320, 420, 520, 620, 720, 820, 920) in which the second refrigerant flows, and a cascade heat exchanger (15, 25, 35, 45, 55 65, 75, 85, 95) in which the first refrigerant and a second refrigerant are heat-exchanged with each other;
an indoor heat exchanger (17, 27, 37, 47 , 57, 67, 77, 87, 97) through which indoor heating or cooling is performed using the second refrigerant; and
a hot water supply part (13, 23, 33, 43, 53, 63, 73, 83, 93) performing a hot water supply using the first refrigerant, the hot water supply part (13, 23, 33, 43, 53, 63, 73, 83, 93) including:
a water supply passage (131, 231, 331, 431, 531, 631, 731, 831, 931) through which water is supplied;
a water supply storage part (132, 232, 332, 432, 532, 632, 732, 832, 932) in which the water supplied through the water supply passage is stored; and **characterized by**
a hot water supply heat exchanger (16, 26, 36, 46, 56, 66, 76, 86, 96), **characterized in that**
the hot water supply heat exchanger (16, 26, 36, 46, 56, 66, 76, 86, 96) communicates with the first refrigerant pipe and wherein the hot water supply heat exchanger is received in the water supply storage part (132, 232, 332, 432, 532, 632, 732, 832, 932) to heat the water using the first refrigerant, and
when the first compressor (111, 211, 311, 411, 511, 611, 711, 811, 911) operates to perform a heating operation, the first refrigerant is condensed through the hot water supply

2. The hot water supply device (1, 2, 3, 4, 5, 6, 7, 8, 9) according to claim 1, wherein the first refrigerant circulation part (11, 21, 31, 41, 51, 61, 71, 81, 91) further comprises a first flow switch part (115, 215, 315, 415, 515, 615, 715, 815, 915) installed at an outlet of the first compressor (111, 211, 311, 411, 511, 611, 711, 811, 911) to switch a flow direction of the first refrigerant to perform a switching of a cooling or heating operation, and
the hot water supply heat exchanger (16, 26, 36, 46, 56, 66, 76, 86, 96) is disposed between the first compressor (111, 211, 311, 411, 511, 611, 711, 811, 911) and the first flow switch part (115, 215, 315, 415, 515, 615, 715, 815, 915) in the first refrigerant cycle to continuously perform the hot water supply, regardless of the switching of the cooling or heating operation.
heat exchanger. (16, 26, 36, 46, 56, 66, 76, 86, 96) and additionally condensed through the cascade heat exchanger thereafter.

3. The hot water supply device (8, 9) according to any of the preceding claims, wherein at least one compressor of the first refrigerant circulation part (81, 91) and the second refrigerant circulation part (82, 92) is provided with a multi-stage compressor (811, 911, 821, 921) comprising a lower end compression part (817, 917, 827, 927) and an intermediate compression part (818, 918, 828, 928) in which the refrigerant passing through the lower end compression part (811, 911, 821, 921) is compressed, and
the at least one refrigerant circulation part comprises:
a phase separator (881, 981, 883, 983) separating the refrigerant condensed in the at least one refrigerant circulation part into a vapor refrigerant and a liquid refrigerant; and
an injection valve (884, 984, 885, 985) guiding the vapor refrigerant separated in the phase separator into the intermediate compression part (818, 918, 828, 928).

4. The hot water supply device (1, 2, 3, 4, 5, 6, 7, 8, 9) according to any of the preceding claims, wherein the second refrigerant circulation part (12, 22, 32, 42, 52, 62, 72, 82, 92) further comprises an auxiliary hot water supply heat exchanger connected to the hot water supply part (13, 23, 33, 43, 53, 63, 73, 83, 93) to perform the hot water supply using heat of the second refrigerant.

5. The hot water supply device (5) according to any of the preceding claims, further comprising:
a bypass pipe (580) installed at outlet of the first compressor (511) for guiding a first refrigerant to bypass the hot water supply heat exchanger (56); and
a first hot water supply flow adjustment part (581) for adjusting an amount of first refrigerant discharge from a first compressor (511) and introduced into the hot water supply heat exchanger (56) and an amount of the first refrigerant flowing into the bypass pipe (580).

6. The hot water supply device (5) according to claim 5, further comprising an auxiliary hot water supply pipe (590) connecting the first refrigerant circulation part (511) and the second refrigerant circulation part (512) to each other to allow the refrigerant flowing into the hot water supply heat exchanger (56) to be compressed by the second compressor (521).

7. The hot water supply device (5) according to any of the preceding claims, further comprising:
a hot water supply flow adjustment part (593) for selectively intercepting a flow of the first refrigerant flowing toward the hot water supply heat exchanger (56); and
an auxiliary flow adjustment part (585) for selectively intercepting a flow of the second refrigerant between the second compressor (521) and the hot water supply heat exchanger (56).

8. The hot water supply device (1, 2, 3, 4, 5, 6, 7, 8, 9) according to any of the preceding claims, wherein the indoor heating is performed using water heat-exchanged with the second refrigerant in the indoor heat exchanger (17, 27, 37, 47 , 57, 67, 77, 87, 97).

9. The hot water supply device (6, 7) according to claim 8, further comprising:
a heating part (64, 74) receiving heat from the second refrigerant of the indoor heat exchanger (67, 77) to perform the indoor heating; and
a water pipe (680, 780) connecting the indoor heat exchanger (67, 77) and the heating part (64, 74) to each other to circulate water between the indoor heat exchanger and (67, 77) the heating part (64, 74),
wherein, in case of a defrosting operation mode, the first refrigerant and the second refrigerant of the cascade condenser are heat-exchanged with the water passing through the heating part (64, 74), thereby being evaporated.

10. The hot water supply device (7) according to claim 9, further comprising:
a bypass water pipe (789) bypassing at least portion of the water passing through the heating part (74) into the cascade condenser; and
a bypass flow adjustment part selectively intercepting a flow of the water passing through the bypass water pipe (789),
wherein, in case of the defrosting operation mode, the bypass flow adjustment part is opened.

## Patentansprüche

1. Heißwasserversorgungsvorrichtung (1, 2, 3, 4, 5, 6, 7, 8, 9), die eine Wärmepumpeneinheit (10, 20, 30, 40, 50, 60, 70) aufweist, wobei die Wärmepumpeneinheit umfasst:
einen ersten Kältemittelzirkulationsteil (11, 21, 31, 41, 51, 61, 71, 81, 91), in dem ein erster Kältemittelkreislauf unter Verwendung eines ersten Kältemittels durchgeführt wird, wobei der erste Kältemittelzirkulationsteil (11, 21, 31, 41, 51, 61, 71, 81, 91) einen ersten Kompressor (111, 211, 311, 411, 511, 611, 711, 811, 911), der das erste Kältemittel komprimiert, einen Außenwärmetauscher (113, 213, 313, 413, 513, 613, 713, 813, 913), der einen Wärmeaustausch zwischen dem ersten Kältemittel und Außenluft durchführt, und eine erste Kältemittelrohrleitung (110, 210, 310, 410, 510, 610, 710, 810, 910), in der das erste Kältemittel strömt, aufweist; und
einen zweiten Kältemittelzirkulationsteil (12, 22, 32, 42, 52, 62, 72, 82, 92), in dem ein zweiter Kältemittelkreislauf unter Verwendung des zweiten Kältemittels, das mit dem ersten Kältemittel Wärme ausgetauscht hat, durchgeführt wird, wobei der zweite Kältemittelzirkulationsteil einen zweiten Kompressor (121, 221, 321, 421, 521, 621, 721, 821, 921), der das zweite Kältemittel komprimiert, und eine zweite Kältemittelrohrleitung (120, 220, 320, 420, 520, 620, 720, 820, 920), in der das zweite Kältemittel strömt, und einen Kaskadenwärmetauscher (15, 25, 35, 45, 55, 65, 75, 85, 95), in dem das erste Kältemittel und ein zweites Kältemittel miteinander Wärme austauschen, aufweist;
einen Innenwärmetauscher (17, 27, 37, 47, 57, 67, 77, 87, 97), durch den unter Verwendung des zweiten Kältemittels eine Innenheizung oder Kühlung durchgeführt wird; und
einen Heißwasserversorgungsteil (13, 23, 33, 43, 53, 63, 73, 83, 93), der eine Heißwasserversorgung unter Verwendung des ersten Kältemittels durchführt, wobei der Heißwasserversorgungsteil (13, 23, 33, 43, 53, 63, 73, 83, 93) umfasst:
einen Wasserversorgungsdurchgang (131, 231, 331, 431, 531, 631, 731, 831, 931), durch den Wasser zugeführt wird;
einen Wasserversorgungsspeicherteil (132, 232, 332, 432, 532, 632, 732, 832, 932), in dem das durch den Wasserversorgungsdurchgang zugeführte Wasser gespeichert wird; und **gekennzeichnet durch**
einen Heißwasserversorgungswärmetauscher (16, 26, 36, 46, 56, 66, 76, 86, 96), **dadurch** gekennzeichnet, dass
der Heißwasserversorgungswärmetauscher (16, 26, 36, 46, 56, 66, 76, 86, 96) mit der ersten Kältemittelrohrleitung in Verbindung steht und wobei der Heißwasserversorgungswärmetauscher in dem Wasserversorgungsspeicherteil (132, 232, 332, 432, 532, 632, 732, 832, 932) aufgenommen ist, um das Wasser unter Verwendung des ersten Kältemittels zu heizen, und
das erste Kältemittel **durch** den Heißwasserversorgungswärmetauscher (16, 26, 36, 46, 56, 66, 76, 86, 96) kondensiert wird und danach zusätzlich **durch** den Kaskadenwärmetauscher kondensiert wird, wenn der erste Kompressor (111, 211, 311, 411, 511, 611, 711, 811, 911) arbeitet, um einen Heizbetrieb durchzuführen.

2. Heißwasserversorgungsvorrichtung (1, 2, 3, 4, 5, 6, 7, 8, 9) nach Anspruch 1, wobei der erste Kältemittelzirkulationsteil (11, 21, 31, 41, 51, 61, 71, 81, 91) ferner einen ersten Strömungsschaltteil (115, 215, 315, 415, 515, 615, 715, 815, 915) aufweist, der an einem Auslass des ersten Kompressors (111, 211, 311, 411, 511, 611, 711, 811, 911) installiert ist, um eine Strömungsrichtung des ersten Kältemittels umzuschalten, um ein Umschalten eines Kühl- oder Heizbetriebs durchzuführen, und
der Heißwasserversorgungswärmetauscher (16, 26, 36, 46, 56, 66, 76, 86, 96) zwischen dem ersten Kompressor (111, 211, 311, 411, 511, 611, 711, 811, 911) und dem ersten Strömungsschaltteil (115, 215, 315, 415, 515, 615, 715, 815, 915) in dem ersten Kältemittelkreislauf angeordnet ist, um die Heißwasserversorgung ungeachtet des Schaltens des Kühl- oder Heizbetriebs beständig durchzuführen.

3. Heißwasserversorgungsvorrichtung (8, 9) nach einem der vorhergehenden Ansprüche, wobei wenigstens ein Kompressor des ersten Kältemittelzirkulationsteils (81, 91) und des zweiten Kältemittelzirkulationsteils (82, 92) mit einem mehrstufigen Kompressor (811, 911, 821, 921) versehen ist, der einen unteren Kompressionsteil (817, 917, 827, 927) und einen mittleren Kompressionsteil (818, 918, 828, 928), in dem das Kältemittel, das den unteren Kompressionsteil (811, 911, 821, 921) durchläuft, komprimiert wird, aufweist, und
wobei der wenigstens eine Kältemittelzirkulationsteil aufweist:
einen Phasenabscheider (881, 981, 883, 983), der das Kältemittel, das in dem wenigstens einen Kältemittelzirkulationsteil kondensiert wird, in ein dampfförmiges Kältemittel und ein flüssiges Kältemittel abscheidet; und
ein Einspritzventil (884, 984, 885, 985), welches das in dem Phasenabscheider abgeschiedene dampfförmige Kältemittel in den mittleren Kompressionsteil (818, 918, 828, 928) leitet.

4. Heißwasserversorgungsvorrichtung (1, 2, 3, 4, 5, 6, 7, 8, 9) nach einem der vorhergehenden Ansprüche, wobei der zweite Kältemittelzirkulationsteil (12, 22, 32, 42, 52, 62, 72, 82, 92) ferner einen Hilfsheißwasserversorgungswärmetauscher aufweist, der mit dem Heißwasserversorgungsteil (13, 23, 33, 43, 53, 63, 73, 83, 93) verbunden ist, um die Heißwasserversorgung unter Verwendung von Wärme des zweiten Kältemittels durchzuführen.

5. Heißwasserversorgungsvorrichtung (5) nach einem der vorhergehenden Ansprüche, die ferner aufweist:
eine Umleitungsrohrleitung (580), die an dem Auslass des ersten Kompressors (511) installiert ist, um ein erstes Kältemittel zu leiten, so dass es den Heißwasserversorgungswärmetauscher (56) umgeht; und
einen ersten Heißwasserversorgungsströmungseinstellteil (581) zum Einstellen einer Menge des ersten Kältemittels, das von einem ersten Kompressor (511) abgegeben und in den Heißwasserversorgungswärmetauscher (56) eingeleitet wird, und einer Menge des ersten Kältemittels das in die Umleitungsrohrleitung (580) strömt.

6. Heißwasserversorgungsvorrichtung (5) nach Anspruch 5, die ferner eine Hilfsheißwasserversorgungsrohrleitung (590) aufweist, die den ersten Kältemittelzirkulationsteil (511) und den zweiten Kältemittelzirkulationsteil (512) miteinander verbindet, um zuzulassen, dass das in den Heißwasserversorgungswärmetauscher (56) strömende Kältemittel von dem zweiten Kompressor (521) komprimiert wird.

7. Heißwasserversorgungsvorrichtung (5) nach einem der vorhergehenden Ansprüche, die ferner aufweist:
einen Heißwasserversorgungsströmungseinstellteil (593) zum wahlweisen Unterbrechen einer Strömung des ersten Kältemittels, das in Richtung des Heißwasserversorgungswärmetauschers (56) strömt; und
einen Hilfsströmungseinstellteil (585) zum wahlweisen Unterbrechen einer Strömung des zweiten Kältemittels zwischen dem zweiten Kompressor (521) und dem Heißwasserversorgungswärmetauscher (56).

8. Heißwasserversorgungsvorrichtung (1, 2, 3, 4, 5, 6, 7, 8, 9) nach einem der vorhergehenden Ansprüche, wobei die Innenheizung unter Verwendung von Wasser, das in dem Innenwärmetauscher (17, 27, 37, 47, 57, 67, 77, 87, 97) mit dem zweiten Kältemittel Wärme getauscht hat, durchgeführt wird.

9. Heißwasserversorgungsvorrichtung (6, 7) nach Anspruch 8, die ferner aufweist:
einen Heizungsteil (64, 74), der Wärme von dem zweiten Kältemittel des Innenwärmetauschers (67, 77) aufnimmt, um die Innenheizung durchzuführen; und
eine Wasserrohrleitung (680, 780), die den Innenwärmetauscher (67, 77) und den Heizungsteil (64, 74) miteinander verbindet, um Wasser zwischen dem Innenwärmetauscher (67, 77) und dem Heizungsteil (64, 74) zu zirkulieren,
wobei das erste Kältemittel und das zweite Kältemittel des Kaskadenkondensators in dem Fall einer Entfrostungsbetriebsart mit dem Wasser Wärme tauschen, das den Heizungsteil (64, 74) durchläuft, wodurch sie verdampft werden.

10. Heißwasserversorgungsvorrichtung (7) nach Anspruch 9, die ferner aufweist:
eine Umleitungswasserrohrleitung (789), die wenigstens einen Teil des Wassers, das den Heizungsteil (74) durchläuft, in den Kaskadenkondensator umleitet; und
einen Umleitungsströmungseinstellteil, der eine Strömung des Wassers, das die Umleitungswasserrohrleitung (789) durchläuft, wahlweise unterbricht,
wobei der Umleitungsströmungseinstellteil im Fall der Entfrostungsbetriebsart geöffnet ist.

## Revendications

1. Dispositif d'alimentation en eau chaude (1, 2, 3, 4, 5, 6, 7, 8, 9), comprenant :
une unité à pompe à chaleur (10, 20, 30, 40, 50, 60, 70), l'unité à pompe à chaleur inclut :
une partie de circulation de premier réfrigérant (11, 21, 31, 41, 51, 61, 71, 81, 91) dans laquelle un cycle de premier réfrigérant utilisant un premier réfrigérant est réalisé, la partie de circulation de premier réfrigérant (11, 21, 31, 41, 51, 61, 71, 81, 91) comprenant un premier compresseur (111, 211, 311, 411, 511, 611, 711, 811, 911) comprimant le premier réfrigérant, un échangeur de chaleur d'extérieur (113, 213, 313, 413, 513, 613, 713, 813, 913) qui réalise un échange de chaleur entre le premier réfrigérant et de l'air d'extérieur, et un tuyau de premier réfrigérant (110, 210, 310, 410, 510, 610, 710, 810, 910) dans lequel le premier réfrigérant s'écoule ; et
une partie de circulation de second réfrigérant (12, 22, 32, 42, 52, 62, 72, 82, 92) dans laquelle un cycle de second réfrigérant utilisant le second réfrigérant ayant subi un échange de chaleur avec le premier réfrigérant est réalisé, la partie de circulation de second réfrigérant comprenant un second compresseur (121, 221, 321, 421, 521, 621, 721, 821, 921) comprimant le second réfrigérant et un tuyau de second réfrigérant (120, 220, 320, 420, 520, 620, 720, 820, 920) dans lequel le second réfrigérant s'écoule, et un échangeur de chaleur en cascade (15, 25, 35, 45, 55, 65, 75, 85, 95) dans lequel le premier réfrigérant et un second réfrigérant subissent un échange de chaleur l'un avec l'autre ;
un échangeur de chaleur d'intérieur (17, 27, 37, 47, 57, 67, 77, 87, 97) à travers lequel un chauffage ou refroidissement d'intérieur est réalisé en utilisant le second réfrigérant ; et
une partie d'alimentation en eau chaude (13, 23, 33, 43, 53, 63, 73, 83, 93) réalisant une alimentation en eau chaude en utilisant le premier réfrigérant, la partie d'alimentation en eau chaude (13, 23, 33, 43, 53, 63, 73, 83, 93) incluant :
un passage d'alimentation en eau (131, 231, 331, 431, 531, 631, 731, 831, 931) à travers lequel de l'eau est fournie ;
une partie de stockage d'alimentation en eau (132, 232, 332, 432, 532, 632, 732, 832, 932) dans laquelle l'eau fournie à travers le passage d'alimentation en eau est stockée ; et **caractérisé par**
un échangeur de chaleur d'alimentation en eau chaude (16, 26, 36, 46, 56, 66, 76, 86, 96), **caractérisé en ce que**
l'échangeur de chaleur d'alimentation en eau chaude (16, 26, 36, 46, 56, 66, 76, 86, 96) communique avec le tuyau de premier réfrigérant, et dans lequel l'échangeur de chaleur d'alimentation en eau chaude est reçu dans la partie de stockage d'alimentation en eau (132, 232, 332, 432, 532, 632, 732, 832, 932) pour chauffer l'eau en utilisant le premier réfrigérant, et
lorsque le premier compresseur (111, 211, 311, 411, 511, 611, 711, 811, 911) fonctionne pour réaliser une opération de chauffage, le premier réfrigérant est condensé à travers l'échangeur de chaleur d'alimentation en eau chaude (16, 26, 36, 46, 56, 66, 76, 86, 96) et en outre condensé à travers l'échangeur de chaleur en cascade après cela.

2. Dispositif d'alimentation en eau chaude (1, 2, 3, 4, 5, 6, 7, 8, 9) selon, la revendication 1, dans lequel la partie de circulation de premier réfrigérant (11, 21, 31, 41, 51, 61, 71, 81, 91) comprend en outre une première partie de commutation d'écoulement (115, 215, 315, 415, 515, 615, 715, 815, 915) installée à une sortie du premier compresseur (111, 211, 311, 411, 511, 611, 711, 811, 911) pour commuter une direction d'écoulement du premier réfrigérant pour réaliser une commutation d'une opération de refroidissement ou de chauffage, et
l'échangeur de chaleur d'alimentation en eau chaude (16, 26, 36, 46, 56, 66, 76, 86, 96) est disposé entre le premier compresseur (111, 211, 311, 411, 511, 611, 711, 811, 911) et la première partie de commutation d'écoulement (115, 215, 315, 415, 515, 615, 715, 815, 915) dans le cycle de premier réfrigérant pour réaliser en continu l'alimentation en eau chaude, indépendamment de la commutation de l'opération de refroidissement ou de chauffage.

3. Dispositif d'alimentation en eau chaude (8, 9) selon l'une quelconque des revendications précédentes, dans lequel au moins un compresseur de la partie de circulation de premier réfrigérant (81, 91) et la partie de circulation de second réfrigérant (82, 92) est pourvu d'un compresseur à étages multiples (811, 911, 821, 921) comprenant une partie de compression d'extrémité inférieure (817, 917, 827, 927) et une partie de compression intermédiaire (818, 918, 828, 928) dans laquelle le réfrigérant passant à travers la partie de compression d'extrémité inférieure (811, 911, 821, 921) est comprimé, et
l'au moins une partie de circulation de réfrigérant comprend :
un séparateur de phase (881, 981, 883, 983) séparant le réfrigérant condensé dans l'au moins une partie de circulation de réfrigérant en un réfrigérant en phase vapeur et un réfrigérant en phase liquide ; et
une valve d'injection (884, 984, 885, 985) guidant le réfrigérant en phase vapeur séparé dans le séparateur de phase dans la partie de compression intermédiaire (818, 918, 828, 928).

4. Dispositif d'alimentation en eau chaude (1, 2, 3, 4, 5, 6, 7, 8, 9) selon l'une quelconque des revendications précédentes, dans lequel la partie de circulation de second réfrigérant (12, 22, 32, 42, 52, 62, 72, 82, 92) comprend en outre un échangeur de chaleur d'alimentation en eau chaude auxiliaire raccordé à la partie d'alimentation en eau chaude (13, 23, 33, 43, 53, 63, 73, 83, 93) pour réaliser l'alimentation en eau chaude en utilisant de la chaleur du second réfrigérant.

5. Dispositif d'alimentation en eau chaude (5) selon l'une quelconque des revendications précédentes, comprenant en outre :
un tuyau de dérivation (580) installé à la sortie du premier compresseur (511) pour guider un premier réfrigérant pour contourner l'échangeur de chaleur d'alimentation en eau chaude (56) ; et
une première partie de réglage d'écoulement d'alimentation en eau chaude (581) pour ajuster une quantité de premier réfrigérant refoulé d'un premier compresseur (511) et introduit dans l'échangeur de chaleur d'alimentation en eau chaude (56) et une quantité du premier réfrigérant s'écoulant dans le tuyau de dérivation (580).

6. Dispositif d'alimentation en eau chaude (5) selon la revendication 5, comprenant en outre un tuyau d'alimentation en eau chaude auxiliaire (590) raccordant la partie de circulation de premier réfrigérant (511) et la partie de circulation de second réfrigérant (512) l'une à l'autre pour permettre au réfrigérant s'écoulant dans l'échangeur de chaleur d'alimentation en eau chaude (56) d'être comprimé par le second compresseur (521).

7. Dispositif d'alimentation en eau chaude (5) selon l'une quelconque des revendications précédentes, comprenant en outre :
une partie de réglage d'écoulement d'alimentation en eau chaude (593) pour intercepter sélectivement un écoulement du premier réfrigérant s'écoulant vers l'échangeur de chaleur d'alimentation en eau chaude (56) ; et
une partie de réglage d'écoulement auxiliaire (585) pour intercepter sélectivement un écoulement du second réfrigérant entre le second compresseur (521) et l'échangeur de chaleur d'alimentation en eau chaude (56).

8. Dispositif d'alimentation en eau chaude (1, 2, 3, 4, 5, 6, 7, 8, 9) selon l'une quelconque des revendications précédentes, dans lequel le chauffage d'intérieur est réalisé en utilisant de l'eau ayant subi un échange de chaleur avec le second réfrigérant dans l'échangeur de chaleur d'intérieur (17, 27, 37, 47, 57, 67, 77, 87, 97).

9. Dispositif d'alimentation en eau chaude (6, 7) selon la revendication 8, comprenant en outre :
une partie de chauffage (64, 74) recevant de la chaleur à partir du second réfrigérant de l'échangeur de chaleur d'intérieur (67, 77) pour réaliser le chauffage d'intérieur ;
et
un tuyau d'eau (680, 780) raccordant l'échangeur de chaleur d'intérieur (67, 77) et la partie de chauffage (64, 74) l'un à l'autre pour faire circuler de l'eau entre l'échangeur de chaleur d'intérieur et (67, 77) la partie de chauffage (64, 74),
dans lequel, en cas d'un mode de fonctionnement à dégivrage, le premier réfrigérant et le second réfrigérant du condenseur en cascade subissent un échange de chaleur avec l'eau passant à travers la partie de chauffage (64, 74), étant ainsi évaporés.

10. Dispositif d'alimentation en eau chaude (7) selon la revendication 9, comprenant en outre :
un tuyau d'eau de dérivation (789) dérivant au moins une portion de l'eau passant à travers la partie de chauffage (74) dans le condenseur en cascade ; et
une partie de réglage d'écoulement de dérivation pour intercepter sélectivement un écoulement de l'eau passant à travers le tuyau d'eau de dérivation (789),
dans lequel, dans le cas du mode de fonctionnement à dégivrage, la partie de réglage d'écoulement de dérivation est ouverte.
